(19) **Europäisches Patentamt**

**European Patent Office**

**Office européen des brevets**

(11) **EP 1 091 197 B1**

(12) **EUROPÄISCHE PATENTSCHRIFT**

(45) Veröffentlichungstag und Bekanntmachung des Hinweises auf die Patenterteilung:
**08.11.2006 Patentblatt 2006/45**

(51) Int Cl.:
*G01F 9/00* *(2006.01)*     *G01F 25/00* *(2006.01)*
*F02M 65/00* *(2006.01)*

(21) Anmeldenummer: **00890294.2**

(22) Anmeldetag: **27.09.2000**

(54) **Vorrichtung zur kontinuierlichen Messung des dynamischen Kraftstoffverbrauchs eines Verbrauchers**

Device for the continuous measurement of the dynamic fuel consumption of a consumer

Dispositif pour la mesure continue de la consommation dynamique de combustible d'un consommateur

(84) Benannte Vertragsstaaten:
**AT BE CH CY DE DK ES FI FR GB GR IE IT LI LU MC NL PT SE**

(30) Priorität: **06.10.1999 AT 69199 U**

(43) Veröffentlichungstag der Anmeldung:
**11.04.2001 Patentblatt 2001/15**

(73) Patentinhaber: **AVL List GmbH**
**8020 Graz (AT)**

(72) Erfinder:
• **Gruber, Kurt, Dipl.-Ing.**
**8063 Eggersdorf (AT)**

• **Purkarthofer, Ferdinand**
**8061 St. Radegund (AT)**
• **Wiesinger, Michael, Dipl.-Ing.**
**8020 Graz (AT)**

(74) Vertreter: **Laminger, Norbert et al**
**Patentanwälte**
**Klein, Pinter & Laminger OEG**
**Prinz-Eugen-Strasse 70**
**1040 Wien (AT)**

(56) Entgegenhaltungen:
**GB-A- 2 117 048       GB-A- 2 147 057**
**US-A- 3 924 445       US-A- 4 358 947**

**Beschreibung**

Die Erfindung betrifft eine Vorrichtung zur kontinuierlichen Messung des dynamischen Kraftstoffverbrauchs eines Verbrauchers, beinhaltend eine Kraftstoffzuleitung mit einer Pumpe und einem nachgeschalteten kontinuierlich messenden Massestromsensor, vorzugsweise einem Coriolis-Sensor.

Zur dynamischen Messung des Kraftstoffverbrauchs werden zumeist Meßgeräte herangezogen, die eine volumetrische Messung des Durchflusses durchführen. Aus einer zusätzlichen Dichtemessung wird daraus die verbrauchte Kraftstoffmasse ermittelt, die die eigentlich benötigte Meßgröße darstellt. Eine direkte Messung des Masseverbrauches, die den Nachteil der zusätzlichen Dichtemessung vermeidet, läßt sich derzeit nur diskontinuierlich mit der Wägemethode sowie kontinuierlich mit Coriolis-Sensoren realisieren. Aber auch andere, kontinuierlich und massensensitiv messende Durchfluß-Sensoren sind vorstellbar (vgl. z.B. die österr. Patentanmeldung A 2235/94, betreffend eine Vorrichtung zur Massenflußmessung).

Zur Kalibrierung der Kraftstoffverbrauchmeßgeräte werden derzeit hoch genaue geeichte Waagen verwendet. Dazu wird bei einem nominellen Durchfluß für eine bestimmte Zeitdauer der Kraftstoff in einen Wägebehälter abgelassen und die gesamt abgelassene Masse bestimmt. Dies gestaltet sich insbesondere durch die dazu erforderlichen offenen Kraftstoffleitungen als schwierig und gefährlich. Insbesondere treten durch das Verdunsten leichtflüchtiger Kraftstoffkomponenten erhöhte Kalibrierunsicherheiten auf. Nachteilig ist weiters, daß während des Kalibriervorgangs meist ein Abschalten des Verbrauchers nötig ist.

Arbeitet das Meßgerät nach dem Wägeprinzip, so kann eine auf ein Vergleichsnormal rückführbare Kalibrierung durch geeichte Normgewichte vorgenommen werden. Es ist bekannt, eine nach diesem Prinzip arbeitende automatisierte Kalibriereinrichtung in die Kraftstoffwaage einzubauen. Der Nachteil aller Kraftstoffwaagen aber bleibt, daß im Prüfstandsbetrieb je nach Verbrauch immer wieder der Meßtank nachgefüllt werden muß. Dies erfordert eine Unterbrechungen des Meßbetriebes am Prüfstand.

Bei allen Kraftstoffverbrauchmeßgeräten, diskontinuierlich und kontinuierlich messenden, ist der Druckabfall am Durchflußsensor von entscheidender Bedeutung für die Verbrauchsmessung am Prüfstand. Denn der Kraftstoffdruck am Ausgang des Meßsystems, das ist die Anschlußstelle des Verbrauchers, muß praktisch unabhängig vom momentanen Verbrauch sein und darf nur wenige mbar betragen. Auf volumetrischer Messung basierende Durchflußsensoren weisen aufgrund ihrer meist ausreichend großen Rohrquerschnitte im Allgemeinen nur geringe Druckverluste auf. Hingegen werden bei den kontinuierlich messenden Massestromsensoren, etwa bei den Coriolis-Sensoren, durchwegs geringe Rohrnennweiten verwendet, um eine erhöhte Genauigkeit der Sensoren zu erzielen. Dies führt zu hohen strömungsabhängigen Druckverlusten. Um diese zu kompensieren werden meist geregelte Pumpen und Druckstabilisierungseinrichtungen im Zulauf und eventuell auch im Auslauf der entsprechenden Rohrleitungen verwendet.

Der Erfindung liegt nun die Aufgabe zugrunde, eine Einrichtung zur kontinuierlichen Messung des dynamischen Kraftstoffmasseverbrauchs anzugeben, die wirtschaftlich und auf einfache Weise gemäß einer weiterführenden Aufgabenstellung dann auch ohne Unterbrechung des Prüfstandbetriebs eine auf ein Vergleichsnormal rückführbare Kalibrierung des Verbrauchssensors erlaubt.

Erfindungsgemäß wird diese Aufgabe gelöst durch eine in Serie mit dem kontinuierlich messenden Massestromsensor angeordnete diskontinuierlich messende Kalibriereinrichtung für den Massestromsensor, welche während einer fallweise durchgeführten Kalibrierung den auch vom Massestromsensor gemessenen Kraftstoffverbrauch bestimmt. Für die Dauer der kontinuierlichen Verbrauchmessung wird die Kalibriereinrichtung zur kontinuierlichen Versorgung des Massestromsensors und des Verbrauchers entweder laufend befüllt bzw. durchströmt und als zweites Meßsystem betrieben. Die Kalibriereinrichtung kann beispielsweise nach dem Wägeprinzip arbeiten, wobei die Verbrauchswaage während der kontinuierlichen Verbrauchmessung beispielsweise kontinuierlich befüllt werden kann.

Als besonders vorteilhaft und kostengünstig erweist sich jedoch eine Kalibriereinrichtung auf Basis der Füllstandspegelmessung, welche gemäß einem weiteren Erfindungsmerkmal einen mit dem Massestromsensor verbundenen Kalibriertank mit zumindest einem im unteren Bereich dieses Kalibriertanks angeordneten Drucksensor aufweist. Auch diese Kalibriereinrichtung mißt diskontinuierlich und kann während der kontinuierlichen Verbrauchmessung laufend durchströmt bzw. befüllt werden. Es wird also ein kontinuierlich messender Sensor für den Kraftstoffmasseverbrauch kombiniert mit einer nur bei Bedarf eingesetzten diskontinuierlich messenden Kalibriereinrichtung, die auf der Füllstands-Druckpegelmessung beruht und keine Unterbrechung des Prüfstandbetriebes verlangt.

Gemäß einem weiteren Merkmal der Erfindung ist vorgesehen, dass die Kalibriereinrichtung eine Recheneinheit aufweist, welche eine fest verdrahtete Schaltung oder ein Programm enthält, das zumindest die Ausgangswerte des Drucksensors zu Beginn und am Ende des Kalibriervorganges abfragt und daraus die während des Kalibriervorganges verbrauchte Kraftstoffmasse ermittelt. Selbstverständlich kann die Recheneinheit auch Funktionen zur allgemeinen Gerätesteuerung übernehmen. Durch Messen der Druckdifferenz $\Delta p$ zwischen dem Kraftstoffdruck im Kalibriertank vor Beginn und nach Beendigung des Kalibriermessvorganges mittels eines mit dem unteren Bereich des Kalibriertanks in Verbindung stehenden Drucksensors wird die gesamte verbrauchte Kraftstoffmasse bestimmt. Dabei erfolgt die Berechnung nach dem formalen Zusammenhang:

$$M = A\,\Delta p\,/\,g \qquad\qquad\qquad (1)$$

mit:

| | |
|---|---|
| M | verbrauchte Kraftstoffmasse, |
| A | Querschnittfläche des Kalibriertanks, |
| $\Delta p = p1-p2$ | gemessene Druckdifferenz, |
| g | Erdgravitationsbeschleunigung. |

Sowohl die Meßgröße Differenzdruck $\Delta p$ als auch die Meßparameter Querschnittfläche A und Gravitationsbeschleunigung g sind eichfähig bzw. rückführbar auf Vergleichsnormale.

Vorteilhafterweise enthält die Recheneinheit eine fest verdrahtete Schaltung oder ein Programm, das den Kraftstoffverbrauchswert des Massestromsensors abfragt und mit dem von ihr errechneten Wert für die verbrauchte Kraftstoffmasse vergleicht und vorteilhafterweise daraus eine Kalibrierkonstante ermittelt bzw. überprüft. Die aus der Druckmessung bestimmte Kraftstoffmasse wird hierbei automatisch mit dem vom Verbrauchsensor gemessenen, über die Dauer des Kalibriermeßvorganges akkumulierten Kraftstoffmasseverbrauch verglichen und aus diesem Vergleich wird vorteilhafterweise wieder automatisch in bekannter Weise eine Kalibrierkonstante ermittelt oder überprüft.

Die Vorrichtung nach den zuvor beschriebenen Ausführungsformen, in denen von einer zur Kalibriereinrichtung gehörigen Recheneinheit die Rede ist, die insbesondere im Zuge einer Kalibrierung nach der letztgenannten Variante den Kraftstoffverbrauchswert des Massestromsensors abfragt, kann weiter ausgestaltet sein, daß nämlich eine Informationsübertragung nicht nur vom Massestromsensor zur Recheneinheit stattfindet, sondern auch von der Recheneinheit zum Massestromsensor.

Ein üblicherweise eingesetzter Massestromsensor enthält nämlich im Allgemeinen bereits eine eigene Recheneinheit, die laufend aus den von den Meßelementen des Massestromsensors gelieferten Rohdaten durch Anwendung geeigneter Auswerteverfahren die auszugebenden Ergebniswerte bestimmt. Beispielsweise kann dabei eine gespeicherte Kalibrierkonstante oder ein vorherbestimmter Kalibrierverlauf zur Anwendung kommen.

Wenn dann fallweise durch das Gesamtsystem eine Kalibrierung vorgenommen wird, können aktuell gültige Kalibrierwerte, oder Korrekturwerte zu einer vorhergehenden Kalibrierung, von der Recheneinheit bestimmt werden. Erfindungsgemäß sollen nun der Recheneinheit des Massestromsensors solche aus einer aktuellen Kalibrierung gewonnenen Parameter zur Verfügung gestellt werden. Auf diese Art kann der Massestromsensor diese Parameter bei den laufenden Messungen berücksichtigen und stets hochgenaue Meßresultate bestimmen und ausgeben, die dann auch ohne weiteren Rechenaufwand zur Berücksichtigung einer letzten Kalibrierung weiterverwendet werden können.

Zur Realisierung dieser vorteilhaften Maßnahme ist lediglich in an sich bekannter Technik eine bidirektionale Datenverbindung zwischen den beiden Recheneinheiten erforderlich, sowie die Definition der auszutauschenden Parameter und ihrer Verwendung, bzw. die Abstimmung der in den Recheneinheiten zur Anwendung kommenden fest verdrahteten Schaltungen oder Programme.

Gemäß einem weiteren Merkmal der Erfindung ist die Vorrichtung nach einem der vorhergehenden Absätze dadurch gekennzeichnet, dass eine Druckstabilisierungseinrichtung zur Stabilisierung des Vorlaufdrucks des Massestromsensors vorgesehen ist. Um nämlich an der Anschlußstelle des Verbrauchers den geforderten geringen und konstanten Druck (von wenigen mbar) erzeugen zu können, muß der durchflußabhängige Druckabfall am Massestromsensor (von z.B. bis zu 2 bar) variabel kompensiert werden. Insbesonders müssen hochfrequente, sprunghafte oder pulsartige Entnahmen rasch berücksichtigt werden.

Gemäß einer vorteilhaften Ausführungsform der Erfindung ist dabei vorgesehen, dass diese Druckstabilisierungseinrichtung mit dem Kalibriertank volumetrisch gekoppelt ist, so dass die Wirkung der Druckstabilisierungseinrichtung automatisch bei der Kalibrierung mit berücksichtigt wird.

Dazu ist gemäß einem weiteren Erfindungsmerkmal vorgesehen, dass der Kalibriertank und die Druckstabilisierungseinrichtung durch eine gemeinsame Membrane voneinander getrennt sind. Der allgemeine Ausdruck Membrane umfasst auch beispielsweise einen Faltenbalg od. dgl. Damit ist vor dem Durchflußsensor ein nahezu konstanter Druck (von z.B. über 2 bar) durch eine vorzugsweise regelbare Pumpe und einen Druckspeicher mit einer Membran eingestellt, wobei die vergleichsweise langsam reagierende Pumpe zum Einstellen des erforderlichen mittleren Druckes dient und der Druckspeicher den Kraftstoff auch bei hochfrequenter, sprunghafter oder pulsartiger Entnahme rasch bereitstellen kann. Dabei treten aber mit der Membranebewegung verbundene Volumsveränderungen im Bereich zwischen Kalibriereinrichtung und Massestromsensor auf, die einen Kalibrierfehler verursachen könnten, wenn nicht Maßnahmen zu ihrer Berücksichtigung getroffen werden. Konstruktiv ganz einfach ist eine Ausführungsform, bei welcher der Einbau des Druckspeichers in den Kalibriertank derart vorgesehen ist, dass eine Vergrößerung des Volumens des Druckspeichers eine gleich große Verringerung des im Kalibriertank befindlichen Volumens- und umgekehrt - hervorruft. Damit ist auch eine infolge wechselnden Systemdrucks auftretende Veränderung des Volumeninhaltes im Druckspeicher während der Füllstandsmessung berücksichtigt. Die kontinuierlich oder intermittierend betriebene Pumpe des Systems wird in ihrer mittleren Förderleistung so geregelt, daß die Ausgleichsmembrane des Druckspeichers im Mittel - d.h. bei dem mittleren eingestellten Systemdruck- keine, bzw. eine konstante Auslenkung besitzt. Dazu sind Sensoren am Druckspeicher angeordnet, die dem Pumpenregler das benötigte Ist-Größensignal liefern. Dafür in Frage kommen z.B. elektro-optische Lage- oder Distanzsensoren, aber auch ein Sensor für den Fluiddruck im oder nahe dem Druckspeicher kann dafür verwendet werden. Nach dem Durchflußsensor kann in allen oben angeführten Ausführungsformen vorteilhafterweise ein konventioneller Fluiddruckregler zur Einstellung des konstanten und niedrigen Drucks am Verbraucheranschluß vorgesehen sein.

Gemäß einer ersten, konstruktiv sehr einfachen und verläßlichen Ausführungsform ist dabei vorgesehen, dass die Membrane vorzugsweise mittels einer Feder mit einer Kraft beaufschlagt ist, welche dem Fluiddruck in der Kraftstoffzuleitung zum Massestromsensor entgegengesetzt ist.

Gemäß einer anderen Ausführungsform ist dagegen vorgesehen, dass die Membrane mit einer im wesentlichen konstanten Masse gekoppelt ist, welche Masse die Membrane mit einer Gewichtskraft beaufschlagt, welche dem Fluiddruck in der Kraftstoffzuleitung zum Massestromsensor entgegengesetzt ist. Bei dieser Variante ist die ausgeübte Kraft unabhängig von der Auslenkung der Membrane, was eine verbesserte Stabilität des Vorlaufdruckes und damit eine erhöhte Meßgenauigkeit des Massestromsensors bewirkt.

Gemäß einer weiteren Ausführungsform ist vorgesehen, dass die Membrane mittels einer elektrischen, magnetischen oder elektromagnetischen Einrichtung mit einer im wesentlichen membranewegunabhängigen Kraft beaufschlagt ist, welche dem Fluiddruck in der Kraftstoffzuleitung zum Massestromsensor entgegengesetzt ist. Dazu kann beispielsweise vorgesehen sein, dass ein mit der Membrane verbundener Permanentmagnet innerhalb einer ausreichend langen Spule beweglich gelagert ist und eine wegunabhängige Kraftwirkung entsprechend dem elektrischen Strom in der Spule erfährt. Aber auch z.B. elektrostatische Einrichtungen, bei denen durch ein gesteuertes elektrische Feld Kräfte auf z.B. einen Elektret ausgeübt werden, sind vorstellbar.

Besonders vorteilhaft für eine der vorhergehend beschriebenen Vorrichtungen ist es, wenn eine durch ein Umschaltventil aktivierbare Umgehungsleitung vorgesehen ist, die eine Versorgung des Verbrauchers unter vollständiger Umgehung der Kalibriereinrichtung und des Massestromsensors erlaubt. Diese Möglichkeit kann insbesondere auch im Zuge einer Kalibrierung vorteilhaft genutzt werden, da damit durchflußlose Beruhigungszeiten für das Kalibrier- und Meßsystem zu Beginn und / oder Ende des Kalibriervorganges eingestellt werden können, ohne dadurch die Versorgung des Verbrauchers und damit den Prüfstandbetrieb zu unterbrechen.

Nachfolgend wird ein Ausführungsbeispiel anhand von Zeichnungen beschrieben. Es zeigen die Fig. 1 eine schematische Skizze zur Illustration der grundsätzlichen Funktionsweise der Erfindung, Fig. 2 eine mögliche Ausführungsform des hydraulisch-elektrischen Schaltplans einer erfindungsgemäßen Vorrichtung und Fig. 3 eine Konstruktionsskizze einer beispielhaften Ausführungsform eines Kalibriertanks mit integriertem Druckspeicher.

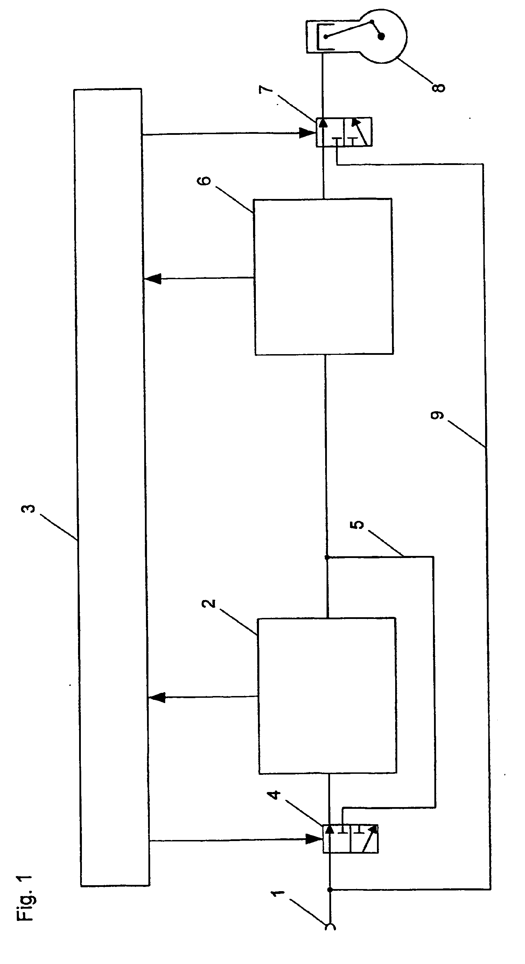

In Fig. 1 ist gezeigt, wie der Kraftstoff von der Versorgungsleitung 1 mittels des von Recheneinheit 3 gesteuerten Ventils 4 der diskontinuierlich messenden Kalibriereinrichtung 2 - beispielsweise einer Kraftstoffverbrauchswaage - und weiter dem kontinuierlich messenden Durchfluß- und/oder Massenstromsensor 6 zugeführt wird. Über ein weiteres, ebenfalls durch die Recheneinheit 3 gesteuertes Umschaltventil 7 wird der Verbraucher 8 mit Kraftstoff versorgt. Der Massestromsensor 6 gibt über eine Datenleitung Meßergebnisse zur weiteren Verarbeitung an die Recheneinheit 3 weiter.

Für die Kalibrierung wird vorerst mittels des Umschaltventils 7 und der Umgehungsleitung 9 der Verbraucher 8 versorgt. Sowohl die diskontinuierlich messende Kalibriereinrichtung 2 als auch der kontinuierlich messende Massestromsensor 6 werden für eine akkumulierende Messung vorbereitet. Sodann wird durch die Recheneinheit 3 das Umschaltventil 7 umgeschaltet. Nach einer entsprechend dem Verbrauch des Verbrauchers 8 zu wählenden Zeit schaltet Recheneinheit 3 das Umschaltventil 7 wieder so um, dass beide Meßsysteme 2, 6 umgangen werden. Die Meßwerte beider Meßsysteme 2, 6 werden nun durch die Recheneinheit ausgelesen und können für eine Überprüfung oder Bestimmung einer Kalibrierkonstanten für den kontinuierlich messende Massestromsensor 6 herangezogen werden.

Für den kontinuierlichen Meßbetrieb wird die Umgehungsleitung 9 mittels Umschaltventil 7 deaktiviert. Weiters muß aber eine kontinuierliche Versorgung des Massenstromsensors 6 und des Verbrauchers 8 sichergestellt werden. Für den Fall, daß das Kalibriersystem 2 über keinen Betriebsmodus zur kontinuierlichen Durchströmung verfügt, kann dazu eine Umgehungsleitung 5 mit von der Recheneinheit 3 angesteuertem Umschaltventil 4 zur Umgehung des Kalibriersystems vorgesehen sein.

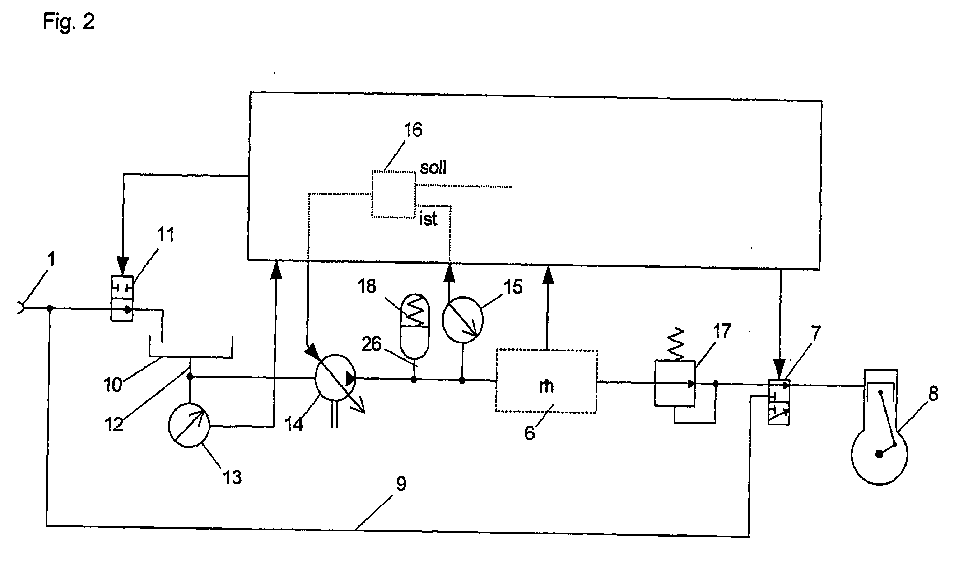

Fig. 2 zeigt eine andere und detailliertere Ausführung der Erfindung, wobei hier als diskontinuierlich messendes Kalibriersystem eine Füllstandspegelmesser dargestellt ist. Der Kraftstoff wird über eine Versorgungsleitung 1 einem Kalibriertank 10 zugeführt. Die Kraftstoffzufuhr kann mittels eines Füllventils 11 geöffnet oder geschlossen werden. Mit dem Auslaß 12 im unteren Bereich des Kalibriertanks 10 in Verbindung ist ein Drucksensor 13, mit dem die Druckmessung für die Kalibrierung wie weiter unten beschrieben vorgenommen werden kann. Der Kraftstoff wird mittels einer geregelten Pumpe 14 durch den Massestromsensor 6, vorzugsweise einem Coriolis-Sensor, gepumpt. Vor dem Durchflußsensor 6 ist ein weiterer Drucksensor 15 angebracht, dessen Ausgangssignal als Istwert für einen Regler 16 für die Pumpe 14 dient. Der dem Regler 16 zugeführte Sollwert beträgt typischerweise z.B. zwischen 2 und 5 bar. Entsprechend dem durch den Drucksensor 15 gemessenen Istwert wird die Pumpe 14 derart geregelt, daß der Druck vor dem Sensor 6 den Sollwert erreicht. Dem jeweiligen Durchfluß des Kraftstoffes entsprechend ergibt sich am Sensor 6 ein strömungsabhängiger Druckverlust von typischerweise z.B. < 2 bar. Der nach dem Sensor 6 anfallende Restdruck wird mittels eines einstellbaren Druckreduzierventils 17 auf einige mbar eingeregelt. Dieser annähernd konstante Restdruck wird dem nachfolgenden Verbraucher 8 zur Verfügung gestellt.

Für eine Versorgung des Verbrauchers 8 unter Umgehung des gesamten Meßsystems ist eine Umgehungsleitung 9 mit einem Umschaltventil 7 vorgesehen, mit dessen Hilfe man zwischen Normal- und Umgehungsbetrieb umschalten kann. Dabei kann das Umschaltventil 7 wie in Fig. 2 gezeigt nach dem Druckreduzierventil 17 oder aber auch davor angeordnet sein, was insbesondere Auswirkungen auf den konstanten Versorgungsdruck des Verbrauchers 8 haben wird. Ein Umgehungsbetrieb ist jeweils vor und nach einem Kalibriermessvorgang nötig. Durch einen hinter der Pumpe 14 aber vor dem Sensor 6 vorgesehenen Druckausgleichsvorrichtung, vorzugsweise einem Druckspeicher 18, beispielsweise mit federbelasteter Membrane oder mit gewichtsbelasteter Membrane zur austenkungsunabhängigen Kraftbeaufschlagung, wird der von Druckspitzen oder -abfällen unabhängige Solldruck am Sensor 6 sicher gewährleistet.

Die Kalibrierung der Kraftstoffverbrauchsmessung erfolgt in der nachfolgend beschriebenen Art und Weise, wobei der Prüfstandsbetrieb nicht unterbrochen werden muss. Zu Anfang eines Kalibriervorgangs wird sichergestellt, daß der Kalibriertank über das Füllventil 11 befüllt wurde. Danach bleibt das Füllventil 11 während der gesamten Kalibrierdauer geschlossen. Nun wird das Umschaltventil 7 derart eingestellt, daß der Verbraucher nicht mehr über den Sensor 6, sondern über die Umgehungsleitung 9 mit Kraftstoff versorgt wird. Nach einer kurzen Zeitdauer von typischerweise z.B. 10 s wird der erste Druckwert p1 im Kalibriertank 10 mittels des Drucksensors 13 ermittelt. Anschließend wird der Massestromsensor 6 zu einer akkumulierenden Massendurchflußmessung gestartet und das Ventil 7 wieder umgeschaltet, so dass der Verbraucher 8 den Kraftstoff aus dem Kalibriertank 10 über den Sensor 6 entnimmt. Nach Erreichen eines ausreichenden akkumulierten Verbrauchswertes wird neuerlich das Ventil 7 umgeschaltet und eine Zeitdauer von wieder typischerweise z.B. 10 s gewartet, bis der zweite, dem nunmehr geringeren Füllstand entsprechende Druck p2 im Kalibriertank 10 mittels des Drucksensors 13 gemessen wird. Nach Beendigung dieser Messungen ist die dem Kalibriertank 10 entnommene Kraftstoffmasse einerseits durch das Ergebnis des Sensors 6 gegeben und andererseits wird es gemäß der oben angegebenen Gleichung (1) aus den beiden gemessenen Druckwerten p1 und p2 bestimmbar. Der Vergleich, vorzugsweise in einer mit dem Drucksensor 13 und dem Sensor 6 verbundenen Recheneinheit 3 erlaubt die Bestimmung oder Überprüfung der Kalibrierkonstanten des Massenstromsensors 7.

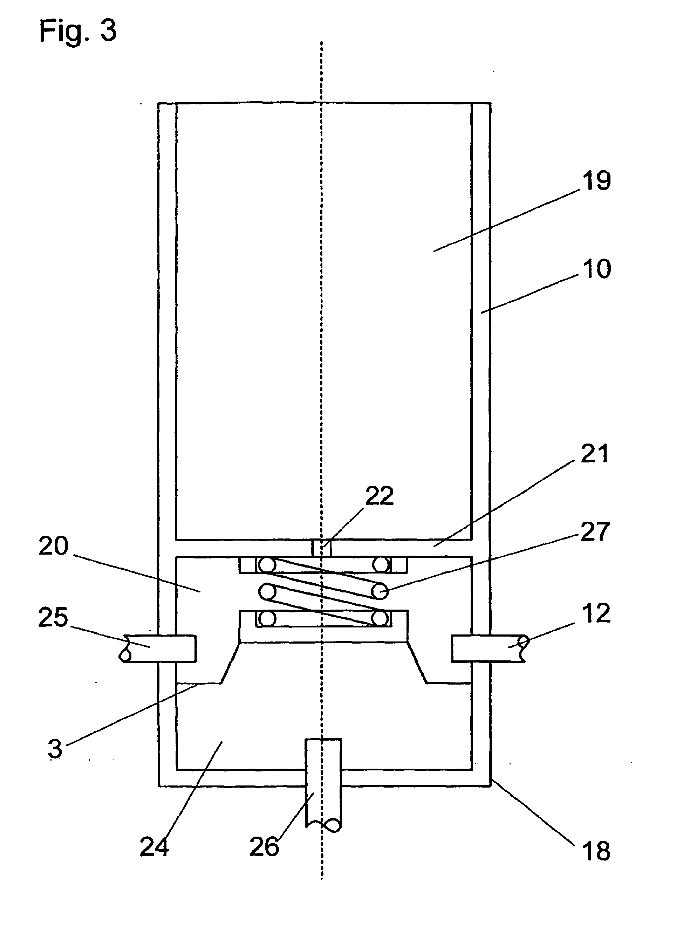

Die Fig. 3 zeigt einen beispielhaften Aufbau eines erfindungsgemäßen Kalibriertanks 10, der vorteilhafterweise in Wirkverbindung mit dem Druckspeicher 18 steht. Letzterer ist im unteren Teil des Kalibriertanks 10 ausgebildet. Dazu sind im Kalibriertank 10 drei Volumina definiert. Das mit der umgebenden Luft verbundene oberste Tankvolumen 19 und das mittlere Tankvolumen 20 sind durch eine in der Trennwand 21 befindliche Öffnung 22 miteinander verbunden und stehen daher beide unter Umgebungsdruck. Davon durch eine bewegliche Membran 23 getrennt ist das Druckspeichervolumen 24. Im unteren Bereich des mittleren Tankvolumens 20 befindet sich eine vom Füllventil 11 kommende Füll-Leitung 25 und gleichfalls geht von diesem Tankvolumen 20 die zur Pumpe 14 und weiter über den Sensor 6 zum Verbraucher 8 führende Leitung 12 aus. Vom Boden des Kalibriertanks 10, d.h. dem Druckspeichervolumen 24, geht die Anschlußleitung 26 des Druckspeichers 18 in das System aus. Zwischen dem beweglichen Teil der Membran 23 und der Trennwand 21 ist eine Feder 27 eingespannt, die die Membran 23 mit einer Kraft beaufschlagt, welche Kraft vorzugsweise auf das Druckspeichervolumen 24 hin gerichtet ist. Entsprechend dem im Volumen 24 herrschenden mittleren Druck und der Vorspannung von Feder 27 stellt sich eine mittlere Membranposition und damit ein mittlerer Wert für das Druckspeichervolumen 24 ein. Der Vorteil einer derartigen Anordnung liegt darin, dass die gesamte an Leitung 26 entnommene Kraftstoffmenge anhand des Füllstandes von Volumen 19 abgelesen werden kann, so dass im Falle des Einbaus einer Pumpe zwischen Entnahmeleitung 12 und der Druckspeicheranschlußleitung 26 - siehe auch Systemskizze in Fig. 2 - keine Kalibrierfehler aus dem möglicherweise nicht ausreichend dynamischen Betrieb einer preisgünstigen Pumpe 14 resultieren. Dies trifft auch zu wenn unterschiedliche Drücke (und damit unterschiedliche Membranpositionen) im Druckspeichervolumen 24 herrschen.

**Patentansprüche**

1. Vorrichtung zur kontinuierlichen Messung des dynamischen Kraftstoffverbrauchs eines Verbrauchers (8), beinhaltend eine Kraftstoffzuleitung (1) mit einer Pumpe (14) und einem nachgeschalteten kontinuierlich messenden Massestromsensor (6), vorzugsweise einem Coriolis-Sensor, **gekennzeichnet durch** eine in Serie mit dem Massestromsensor (6) angeordnete diskontinuierlich messende Kalibriereinrichtung (2) für den Massestromsensor (6), welche während einer fallweisen Kalibrierung den auch vom Massestromsensor (6) gemessenen Kraftstoffverbrauch bestimmt.

2. Vorrichtung nach Anspruch 1, **dadurch gekennzeichnet, dass** die Kalibriereinrichtung (2) einen mit dem Massestromsensor (6) verbundenen Kalibriertank (10) mit zumindest einem im unteren Bereich dieses Kalibriertanks (10) angeordneten Drucksensor (13) aufweist.

3. Vorrichtung nach Anspruch 2, **dadurch gekennzeichnet, dass** die Kalibriereinrichtung (2) eine Recheneinheit (3) aufweist, welche eine fest verdrahtete Schaltung oder ein Programm enthält, das zumindest die Ausgangswerte des Drucksensors (13) zu Beginn und am Ende des Kalibriervorganges abfragt und daraus die während des Kalibriervorganges verbrauchte Kraftstoffmasse ermittelt.

4. Vorrichtung nach Anspruch 3, **dadurch gekennzeichnet, dass** die Recheneinheit eine fest verdrahtete Schaltung oder ein Programm enthält, das den Kraftstoffverbrauchswert des Massestromsensors (6) abfragt und mit dem von ihr errechneten Wert für die verbrauchte Kraftstoffmasse vergleicht und vorteilhafterweise daraus eine Kalibrierkonstante ermittelt bzw. überprüft.

5. Vorrichtung nach einem der vorhergehenden Ansprüche, **dadurch gekennzeichnet, dass** eine Druckstabilisierungsvorrichtung (18) zur Stabilisierung des Vorlaufdruckes des Massestromsensors (6) vorgesehen ist.

6. Vorrichtung nach Anspruch 5, **dadurch gekennzeichnet, dass** die Druckstabilisierungsvorrichtung (18) mit dem Kalibriertank (10) volumetrisch gekoppelt ist.

7. Vorrichtung nach Anspruch 6, **dadurch gekennzeichnet, dass** der Kalibriertank (10) und die Druckstabilisierungseinrichtung (18) durch eine gemeinsame Membrane (23) voneinander getrennt sind.

8. Vorrichtung nach Anspruch 7, **dadurch gekennzeichnet, dass** die Membrane (23) vorzugsweise mittels einer Feder (27) mit einer Kraft beaufschlagt ist, welche dem Fluiddruck in der Kraftstoffzuleitung (26) zum Massestromsensor (6) entgegengesetzt ist.

9. Vorrichtung nach Anspruch 7, **dadurch gekennzeichnet, dass** die Membrane (23) mit einer im wesentlichen konstanten Masse gekoppelt ist, welche Masse die Membrane mit einer Gewichtskraft beaufschlagt, welche dem Fluiddruck in der Kraftstoffzuleitung (26) zum Massestromsensor (6) entgegengesetzt ist.

10. Vorrichtung nach Anspruch 7, **dadurch gekennzeichnet, dass** die Membrane (23) mittels einer elektrischen, magnetischen oder elektromagnetischen Einrichtung mit einer im wesentlichen membranewegunabhängigen Kraft beaufschlagt ist, welche dem Fluiddruck in der Kraftstoffzuleitung (26) zum Massestromsensor (6) entgegengesetzt ist.

11. Vorrichtung nach einem der vorhergehenden Ansprüche, **dadurch gekennzeichnet, dass** eine durch ein Umschaltventil (7) aktivierbare Umgehungsleitung (9) vorgesehen ist, die eine Versorgung des Verbrauchers (8) unter vollständiger Umgehung der Kalibriereinrichtung (2) und des Massestromsensors (6) erlaubt.

**Claims**

1. Device for the continuous measurement of the dynamic fuel consumption of a consumer (8), comprising a fuel supply line (1) with a pump (14) and, connected downstream, a continuously-measuring mass-flow sensor (6), preferably a Coriolis sensor,
**characterised by**
a discontinuously-measuring calibration device (2) for the mass-flow sensor (6) arranged in series with the mass-flow sensor (6) which, during a case-by-case calibration, determines the fuel consumption, which is also measured by the mass-flow sensor.

2. Device according to claim 1,
**characterised in that**
the calibration device (2) provides a calibration tank (10) connected to the mass-flow sensor (6) with at least one pressure sensor (13) arranged in the lower region of this calibration tank (10).

**3.** Device according to claim 2,
**characterised in that**
the calibration device (2) provides a computer unit (3), which contains a hard-wired circuit, or a program, which scans at least the output values of the pressure sensor (13) at the beginning and at the end of the calibration procedure and determines from these the fuel-mass consumed during the calibration procedure.

**4.** Device according to claim 3,
**characterised in that**
the computer unit (3) contains a hard-wired circuit or a program, which scans the fuel-consumption value of the mass-flow sensor (6) and compares this with a value it has calculated for the fuel-mass consumed, and from this advantageously determines and/or checks a calibration constant.

**5.** Device according to any one of the preceding claims,
**characterised in that**
a pressure-stabilising device (18) is provided for stabilising the forward pressure of the mass-flow sensor (6).

**6.** Device according to claims 5,
**characterised in that**
the pressure-stabilising device (18) is connected to the calibration tank (10) in a volumetric manner.

**7.** Device according to claim 6,
**characterised in that**
the calibration tank (10) and the pressure-stabilising device (18) are separated from one another by a common membrane (23).

**8.** Device according to claim 7,
**characterised in that**
the membrane (23) is impinged upon by a force, preferably from a spring (27), which is opposed to the fluid pressure of the fuel-supply line (26) to the mass-flow sensor (6).

**9.** Device according to claim 7,
**characterised in that**
the membrane (23) is connected to an essentially constant mass, which mass impinges on the membrane with a weight, which is opposed to the fluid pressure in the fuel-supply line (26) to the mass-flow sensor (6).

**10.** Device according to claim 7,
**characterised in that**
the membrane (23) is impinged upon by a force from an electrical, magnetic or electro-magnetic device which force is essentially independent of the movement of the membrane and which is opposed to the fluid pressure in the fuel-supply line (26) to the mass-flow sensor (6).

**11.** Device according to any one of the preceding claims,
**characterised in that**
a bypass line (9) is provided, which is capable of being activated by a switching valve (7) and which allows the consumer (8) to be supplied with a complete bypass of the calibration device (2) and the mass-flow sensor (6).

**Revendications**

**1.** Dispositif pour la mesure continue de la consommation dynamique de combustible d'un consommateur (8), comprenant une conduite d'arrivée de combustible (1) avec une pompe (14) et un capteur de débit massique (6) monté en aval, effectuant une mesure continue, de préférence un capteur Coriolis, **caractérisé par** un appareil d'étalonnage (2) monté en série avec le capteur de débit massique (6), effectuant une mesure discontinue pour le capteur de débit massique (6), lequel appareil d'étalonnage détermine la consommation de combustible également mesurée par le capteur de débit massique (6) pendant un étalonnage au cas par cas.

**2.** Dispositif selon la revendication 1, **caractérisé en ce que** l'appareil d'étalonnage (2) présente un réservoir d'étalonnage (10) raccordé au capteur de débit massique (6), avec au moins un capteur de pression (13) monté dans la zone inférieure de ce réservoir d'étalonnage (10).

**3.** Dispositif selon la revendication 2, **caractérisé en ce que** l'appareil d'étalonnage (2) présente une unité de calcul (3), laquelle contient un circuit câblé de façon fixe ou un programme, qui extrait au moins les valeurs initiales du capteur de pression (13) au début et à la fin du processus d'étalonnage, et détermine à partir de ces valeurs la masse de combustible consommée pendant le processus d'étalonnage.

**4.** Dispositif selon la revendication 3, **caractérisé en ce que** l'unité de calcul contient un circuit câblé de façon fixe ou un programme, qui extrait la valeur de consommation de combustible du capteur de débit massique (6), et la compare avec la valeur calculée par l'unité de calcul pour la masse de combustible consommée, et détermine ou vérifie avantageusement, à partir de là, une constante d'étalonnage.

**5.** Dispositif selon l'une des revendications précédentes, **caractérisé en ce qu'**un système de stabilisation de pression (18) est prévu pour la stabilisation de la pression d'admission du capteur de débit massique (6).

**6.** Dispositif selon la revendication 5, **caractérisé en ce que** le système de stabilisation de pression (18) est lié volumétriquement au réservoir d'étalonnage (10).

**7.** Dispositif selon la revendication 6, **caractérisé en ce que** le réservoir d'étalonnage (10) et le système de stabilisation de pression (18) sont séparés l'un de l'autre par une membrane commune (23).

**8.** Dispositif selon la revendication 7, **caractérisé en ce que** la membrane (23) est soumise à une force, de préférence au moyen d'un ressort (27), laquelle force est opposée à la pression de fluide dans la conduite d'arrivée de combustible (26) vers le capteur de débit massique (6).

**9.** Dispositif selon la revendication 7, **caractérisé en ce que** la membrane (23) est liée à une masse essentiellement constante, laquelle masse soumet la membrane à une force de pesanteur, laquelle force est opposée à la pression de fluide dans la conduite d'arrivée de combustible (26) vers le capteur de débit massique (6).

**10.** Dispositif selon la revendication 7, **caractérisé en ce que** la membrane (23) est soumise à une force essentiellement indépendante de la course de la membrane, au moyen d'un appareillage électrique, magnétique ou électromagnétique, laquelle force est opposée à la pression de fluide dans la conduite d'arrivée de combustible (26) vers le capteur de débit massique (6).

**11.** Dispositif selon l'une des revendications précédentes, **caractérisé en ce qu'**il est prévu une conduite de dérivation (9) pouvant être activée grâce à une vanne de dérivation (7), lequel dispositif permet un approvisionnement du consommateur (8) sous dérivation totale de l'appareil d'étalonnage (2) et du capteur de débit massique (6).

Fig. 1

EP 1 091 197 B1

Fig. 2

# Fig. 3